# EUROPEAN PATENT APPLICATION

(11) **EP 3 567 273 A1**
(43) Date of publication of application: **13.11.2019**
(21) Application number: 19173024.1
(22) Date of filing: 07.05.2019
(51) Int. Cl.: F16F 13/14

(54) **ANTI-VIBRATION DEVICE**

(30) Priority: 07.05.2018 US 201815972847
(71) Applicant: Hutchinson Antivibration Systems, Inc., Grand-Rapids, MI 49501 (US)
(72) Inventor: KOLENDA, Jason, Belding, MI 48809 (US)
(74) Representative: Plasseraud IP

(57) **Abstract**

An anti-vibration sleeve comprising an inner strength member and an outer strength member connected by an elastomeric body. Two hydraulic chambers, defined between the elastomeric body and the outer strength member, are connected by a throttled channel and by a bypass channel which is normally closed by a flap belonging to the elastomeric body. An intermediate strength member, embedded in the elastomeric body, has two rings connected by a first spacing member disposed in register with the bypass channel. The first spacing member has two supporting portions separated by an opening which is in register with the flap.

## Description

### TECHNICAL FIELD

The present disclosure relates to anti-vibration devices known as anti-vibration sleeves, used for instance in automobiles.

### PRIOR ART

Known examples of anti-vibration sleeves comprise an intermediate strength member and an elastomeric body which supports the loads and damps vibrations caused for instance by a vehicle movement.

One example of such anti-vibration sleeve is disclosed in US2003178754.

### OBJECTS

An object of the present disclosure is an anti-vibration device comprising:
- an inner strength member;
- an outer strength member surrounding the inner strength member, wherein the outer strength member is tubular and centered on a central axis;
- an elastomeric body disposed between the inner strength member and outer strength member such that vibratory movements between the inner strength member and the outer strength member generate deformations of the elastomeric body;
- at least two hydraulic chambers defined between the elastomeric body and the outer strength member, said hydraulic chambers being substantially diametrically opposite with respect to said central axis;
- a throttled channel connecting said at least two hydraulic chambers;
- a bypass channel connecting said at least two hydraulic chambers independently of the throttled channel, said bypass channel being defined between the elastomeric body and the outer strength member; and
- an intermediate strength member which is embedded in said elastomeric body, said intermediate strength member having:
   - two rings surrounding the central axis and being on opposite sides of said at least two hydraulic chambers;
   - at least a first spacing member connecting said two rings and disposed in register with said bypass channel, said first spacing member being close to an outer surface of said elastomeric body,
wherein said at least two hydraulic chambers, throttled channel and bypass channel are filed with a liquid,
wherein said elastomeric body includes a flap which protrudes in the bypass channel and is normally in elastic contact with the outer strength member so as to close the bypass channel, said flap being elastically deformable when one of said hydraulic chambers has a pressure higher than a predetermined threshold so as to open said bypass channel and enable flow of liquid between said two hydraulic chambers through said bypass channel,
and wherein said first spacing member has two supporting portions separated by an opening which extends parallel to the central axis and is in register with said flap.

Thanks to these features, fatigue resistance and tearing resistance of the flap is increased, since deformations of the flap involve a larger amount of elastomeric material and since stresses created by said deformations are diffused in the elastomeric body under the first spacing member, through the opening thereof. Such opening also eases molding of the elastomeric body. Further, by varying the dimensions of such opening, characteristics of the flap and thus of the anti-vibration device can be varied from one model of anti-vibration device to another.

In embodiments of the above anti-vibration device, one may further use one or several of the following features and any combination thereof:
- said bypass channel has a bottom surface and two side surfaces, wherein said flap protrudes outwardly from said bottom surface and from said two side surfaces, said flap extending substantially in a plane perpendicular to said bottom surface and said side surfaces;
- each of the side surfaces of the bypass channel form an obtuse angle with said bottom surface of the bypass channel;
- said intermediate strength member further has a second spacing member being positioned substantially diametrically opposite to the first spacing member;
- said throttled channel is formed in a C-shaped collar which is clamped between said elastomeric body and said outer strength member and which forms two auxiliary channels communicating with said throttled channel and said bypass channel, respectively on opposite sides of the flap;
- said hydraulic chambers directly communicate with said bypass channel, respectively on opposite sides of the flap, independently of said auxiliary channels;
- a length of said opening substantially corresponds to a length of said flap, measured parallel to the central axis;
- a width of said opening is at least as large as a width of said flap, measured in a plane perpendicular to the central axis.

### BRIEF DESCRIPTION OF THE DRAWINGS

Other features and advantages will appear from the following description of one embodiment, given by way of nonlimiting example, with regard to the drawings.

In the drawings:
- Figure 1 shows an example of anti-vibration device according to the present disclosure;
- Figure 2 is a cross section view of the anti-vibration device of Figure 1 being taken along line II-II of Figure 1;
- Figures 3 and 4 are perspective views of internal parts of the anti-vibration device, viewed in different directions;
- Figure 5 is a view similar to Figure 3, without the C-shaped external collar thereof; and
- Figure 6 shows an intermediate strength member imbedded in the elastomeric body of the anti-vibration device.

### MORE DETAILED DESCRIPTION

In the various drawings, the same references designate identical or similar elements.

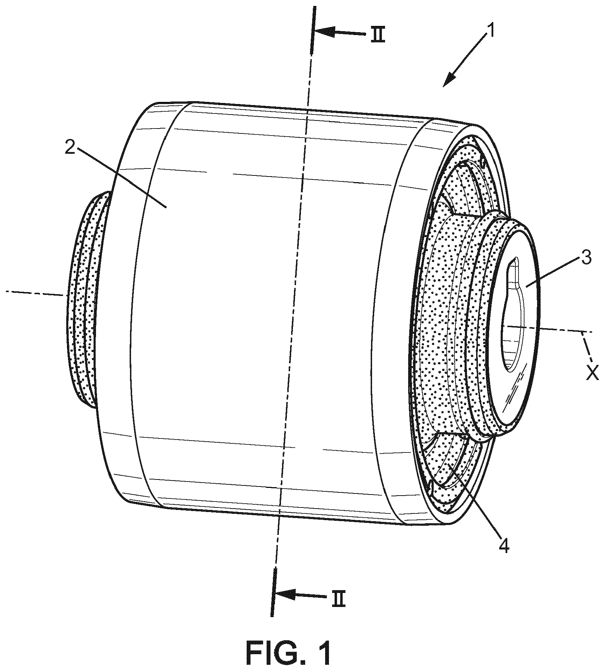

Figure 1 shows an example of anti-vibration device 1 (sleeve) comprising an outer strength member 2, an inner strength member 3 and an elastomeric body 4 interposed between said outer strength member 2 and said inner strength member 3.

The inner strength member 3 and the outer strength member 2 may be respectively connected to, for instance, an axle system of a vehicle and a vehicle body or frame (not shown) for damping vibrations between these two elements.

The outer strength member 2 has a tubular shape and may be centered on a central axis X. The outer strength member 2 may be made out of metal, e.g. steel or aluminum, or out of plastic or composite material.

The inner strength member 3 may have a shape which is centered on the central axis X, thus the inner strength member 3 and the outer strength member 2 might be for instance in a coaxial arrangement about the central axis X. The inner strength member 3may be made of metal, e.g. out of aluminum, steel, or other metals.

The elastomeric body 4 which is radially interposed between the inner strength member 3 and the outer strength member 2, such that vibratory movements between the inner strength member 3 and the outer strength member 2 generate deformations of the elastomeric body 4.

The elastomeric body 4 may be made out of a natural rubber or any other suitable elastomeric material. The elastomeric body 4 may be overmolded over the inner strength member 3.

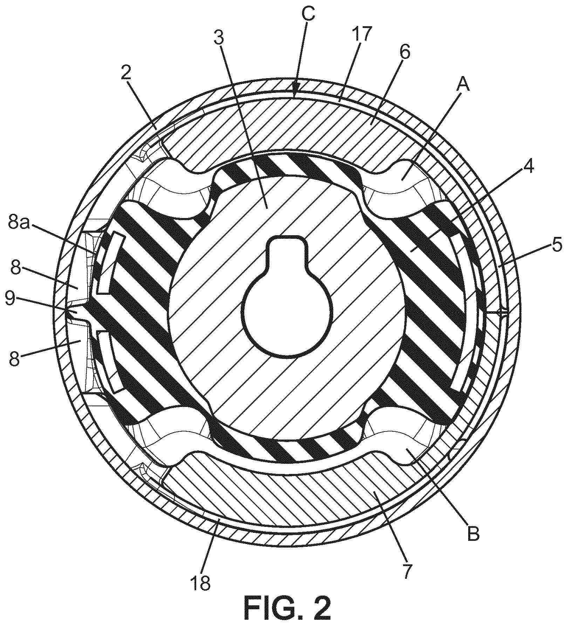

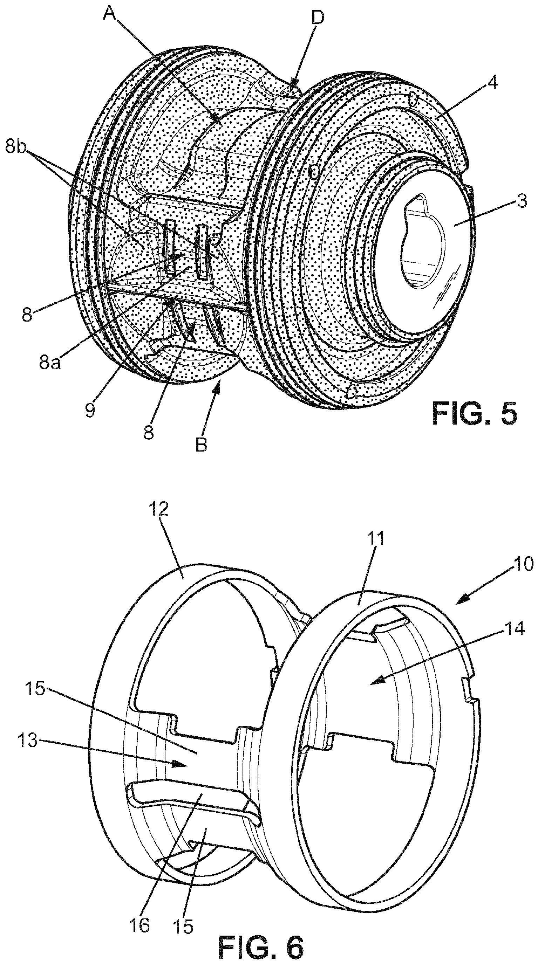

As can be seen in Figure 5, the anti-vibration device 1 further comprises at least two hydraulic chambers A and B defined between the elastomeric body 4 and the outer strength member 2. The hydraulic chambers A and B are preferably arranged substantially diametrically opposite to each other with respect to the central axis X as shown on Figures 2 or 5.

The hydraulic chambers A and B communicate together through a throttled channel 5 and a bypass channel 8 which will be described below. Hydraulic chambers A and B, throttled channel 5 and bypass channel 8 form together an internal space which is filed with liquid, e.g. glycol, and which is tightly closed by the elastomeric body and the external strength member 2.

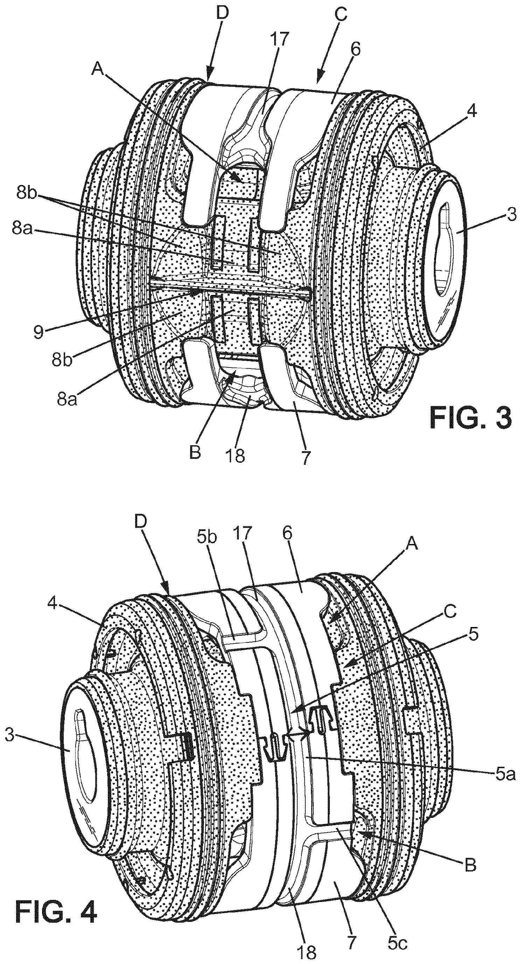

As shown in Figures 2 and 4, the throttled channel 5 permanently connects hydraulic chambers A and B and enables flow of the liquid between hydraulic chambers A and B when vibratory movements between the inner strength member 3 and the outer strength member 2 occur as explained above. The throttled channel 5 may be dimensioned to have a resonance frequency corresponding to some of said vibrations, e.g. between 10 and 20 Hz.

As shown in Figures 3-4, the throttled passage 5 may be formed in a C-shaped collar C which is extends circumferentially around central axis X and may be fitted in a circumferential groove D formed in the elastomeric body 4. The C-shaped collar C may be radially clamped between the elastomeric body 4 and the outer strength member 2.

As shown in Figure 4, throttled channel 5 may be defined by a groove which is formed in an outer periphery of the C-shaped collar C and which is closed radially externally by the outer strength member 2. Throttled channel 5 may include a circumferential section 5a extending between two axial sections 5b, 5c extending parallel to central axis X and communicating respectively with hydraulic chambers A, B.

The C-shaped collar C may be molded out of plastic material.

The C-shaped collar C may be formed by two separate collar elements 6, 7 which are fixed together. Collar elements 6, 7 may each extend circumferentially on part of the circumferential extent of the C-shaped collar C. Collar elements 6, 7 may be for instance snap-fitted together.

Collar elements 6, 7 may be identical and assembled face to face by snap fitting. In that case, each collar element 6, 7 includes half of circumferential section 5a and one of axial sections 5b, 5c.

As can be seen in Figures 2, 3, 5, the bypass channel 8 connects directly hydraulic chambers A, B independently of throttled channel 5. The bypass channel 8 is defined between the elastomeric body 4 and the outer strength member 2. The bypass channel 8 may be preferably positioned substantially diametrically opposite to the throttled channel 5.

The elastomeric body 4 includes a flap 9 which normally protrudes in the bypass channel 8 and is normally in elastic contact with the outer strength member 2 so as to close the bypass channel 8. The flap 9 is elastically deformable when one of the hydraulic chambers A or B has a pressure higher than a predetermined threshold (for instance when a quick movement of high amplitude is imposed between the outer strength member 2 and the inner strength member 3) so as to open said bypass channel 8 and enable flow of liquid between the two hydraulic chambers A and B through the bypass channel.

The bypass channel 8 may have a bottom surface 8a and two side surfaces 8b separated by bottom surface 8a in the direction of central axis X. The side surfaces 8b of the bypass channel 8 may form an obtuse angle with the bottom surface 8a of the bypass channel 8.

The flap 9 may protrude outwardly from the bottom surface 8a and from the two side surfaces 8b, such that the flap 9 extends substantially in a plane which is perpendicular to the bottom surface 8a and to the two side surfaces 8b.

Besides, as shown in Figures 2 and 3, the C-shaped collar 5 may form two auxiliary channels 17 and 18 which communicate with the throttled channel 5 and with the bypass channel 8, respectively on opposite sides of the flap 9.

The anti-vibration device 1 further comprises an intermediate strength member 10 as can be seen in Figures 2 and 6. The intermediate strength member 10 may be embedded in the elastomeric body 4. The intermediate strength member 10 may be made out of metal, e.g. steel, by any known method including for instance stamping and cutting of a metal tube, and then overmolded by elastomeric body 4.

The intermediate strength member 10 may have two rings 11 and 12 which surround the central axis X and which are on opposite sides of hydraulic chambers A, B, close to the axial ends of the outer strength member 2.

The intermediate strength member 10 further may have a first spacing member 13 a second spacing member 14 connecting the two rings 11, 12 and extending axially parallel to the central axis X. The second spacing member 14 may be positioned substantially diametrically opposite to the first spacing member 13.

Each hydraulic chamber A, B may be positioned between said two rings 11, 12 and between said first spacing member 13 and second spacing member 14.

The first spacing member 13 may be disposed in register with the bypass channel 8 and may have a shape corresponding to that of bypass channel 8. The first spacing member 13 may be disposed within the elastomeric close to the outer surface of the elastomeric body 4, i.e. close to said bottom surface 8a and side surfaces 8b. More precisely, the thickness of elastomer over first spacing member 13 may be for instance comprised between 0.5 mm and 2 mm.

The first spacing member 13 may have two supporting portions 15 separated by an opening 16 (slot) in register with the flap 9 of the elastomeric body 4.

The opening 16 may extend parallel to central axis X. The length of the opening 16 may substantially correspond to a length of the flap 9, measured parallel to the central axis X.

Besides, a width of the opening 16 might be preferably at least as large as a width of the flap 9, measured in a plane perpendicular to the central axis X.

Additionally, an internal thickness of the elastomeric body 4 between the intermediate strength member 10 and inner strength member 3, measured in a direction radial to the central axis X, may be remarkably larger than said thickness of elastomer over first spacing member 13, for instance 7 to 15 times said thickness of elastomer over first spacing member 13.

These dispositions contribute to increase fatigue resistance and tearing resistance of the flap 9, since deformations of the flap 9 involve a larger amount of elastomeric material and stresses are diffused in the elastomeric body 4 under the first spacing member 13, through the opening 16 thereof. Such opening also eases molding of the elastomeric body 4. Further, by varying the above defined dimensions of such opening and the elastomeric body (length, width, thickness), characteristics of the flap 9 and thus of the anti-vibration device can be varied from one model of anti-vibration device to another.

## Claims

1. An anti-vibration device comprising:
an inner strength member;
an outer strength member surrounding the inner strength member, wherein the outer strength member is tubular and centered on a central axis;
an elastomeric body disposed between the inner strength member and outer strength member such that vibratory movements between the inner strength member and the outer strength member generate deformations of the elastomeric body;
at least two hydraulic chambers defined between the elastomeric body and the outer strength member, said hydraulic chambers being substantially diametrically opposite with respect to said central axis;
a throttled channel connecting said at least two hydraulic chambers;
a bypass channel connecting said at least two hydraulic chambers independently of the throttled channel, said bypass channel being defined between the elastomeric body and the outer strength member; and
an intermediate strength member which is embedded in said elastomeric body, said intermediate strength member having:
two rings surrounding the central axis and being on opposite sides of said at least two hydraulic chambers;
at least a first spacing member connecting said two rings and disposed in register with said bypass channel, said first spacing member being close to an outer surface of said elastomeric body,
wherein said at least two hydraulic chambers, throttled channel and bypass channel are filed with a liquid,
wherein said elastomeric body includes a flap which normally protrudes in the bypass channel and is normally in elastic contact with the outer strength member so as to close the bypass channel, said flap being elastically deformable when one of said hydraulic chambers has a pressure higher than a predetermined threshold so as to open said bypass channel and enable flow of liquid between said two hydraulic chambers through said bypass channel,
and wherein said first spacing member has two supporting portions separated by an opening in register with said flap.

2. The anti-vibration device according to claim 1, wherein said bypass channel has a bottom surface and two side surfaces, wherein said flap protrudes outwardly from said bottom surface and from said two side surfaces, said flap extending substantially in a plane perpendicular to said bottom surface and said side surfaces.

3. The anti-vibration device according to claim 2, wherein each of the side surfaces of the bypass channel form an obtuse angle with said bottom surface of the bypass channel.

4. The anti-vibration device according to any one of the preceding claims, wherein said intermediate strength member further has a second spacing member being positioned substantially diametrically opposite to the first spacing member.

5. The anti-vibration device according to any one of the preceding claims, wherein said throttled channel is formed in a C-shaped collar which is clamped between said elastomeric body and said outer strength member and which forms two auxiliary channels communicating with said throttled channel and said bypass channel, respectively on opposite sides of the flap.

6. The anti-vibration device according to claim 5, wherein said hydraulic chambers directly communicate with said bypass channel, respectively on opposite sides of the flap, independently of said auxiliary channels.

7. The anti-vibration device according to any one of the preceding claims, wherein a length of said opening substantially corresponds to a length of said flap, measured parallel to the central axis.

8. The anti-vibration device according to any one of the preceding claims, wherein a width of said opening is at least as large as a width of said flap, measured in a plane perpendicular to the central axis.
